# EUROPEAN PATENT SPECIFICATION

(11) **EP 3 871 750 B1**
(45) Date of publication and mention of the grant of the patent: **03.09.2025**
(21) Application number: 21170054.7
(22) Date of filing: 15.07.2016
(51) Int. Cl.: B01D 46/00, B01D 46/52

(54) **MULTI-COMPONENT HOLDING ASSEMBLY FOR MULTI-PANEL AIR FILTER**
MEHRKOMPONENTIGE HALTEVORRICHTUNG FÜR MULTIPANEL-LUFTFILTER
ENSEMBLE DE MAINTIEN À PLUSIEURS COMPOSANTS DESTINÉ À UN FILTRE À AIR À PLUSIEURS PANNEAUX

(30) Priority: 15.07.2015 US 201562192877 P
(43) Date of publication of application: 01.09.2021
(62) Divisional of application: 16825277.3
(73) Proprietor: Baldwin Filters, Inc., Cleveland, OH 44124 (US)
(72) Inventor: VARGHESE, Benny Mathew, Kearney, 68847 (US); DEXTER, Levi William, Elm Creek, 68836 (US)
(74) Representative: Murgitroyd & Company

(56) References cited:
- WO-A1-2007/084709
- WO-A1-2014/040615
- WO-A1-2014/040657
- US-A1- 2012 067 013
- US-A1- 2014 034 565

## Description

### FIELD OF THE INVENTION

This invention generally relates to filters and more particularly to air filters and more particularly to air filters have panels of filter media.

### BACKGROUND OF THE INVENTION

Filter elements are used to filter fluid such as air to prevent damage or reduced functionality of downstream systems. Typically, the filter elements are configured to be a replacement part such that when they become clogged or their useful life is otherwise spent, they can be replaced.

One particular type of filter element utilizes a plurality of panels of filter media operably mounted to a frame. The panels of filter media are operably sealed relative to each other on three sides to form a cavity that is open on a single side. The present invention relates to improvements over the state of the art for this type of filter element.

The following documents may provide technical background to the present disclosure: WO2007084709; US2012067013; US2014034565; WO2014040615; and WO2014040657.

### BRIEF SUMMARY OF THE INVENTION

A filter element is provided as defined in appended claim 1. Optional features are as defined in the appended dependent claims.

In one embodiment, the first portion of the base frame is a first outward extending flange that is received in the first end cap structure and the second portion of the base frame is a second outward extending flange that is received in the second end cap structure. The first and second flanges are on opposite sides of the first opening and extend outward away from one another.

In one embodiment, the support frame defines first, second, third, and fourth sides with, the first and second sides offset from one another and extending between the third and fourth sides. The first side of the support frame is positioned adjacent the first sides of the first and second filter media panels. The second side of the support frame is positioned adjacent the second sides of the first and second filter media panels. The third side of the support frame is positioned adjacent the third sides of the first and second filter media panels. The fourth side of the support frame is positioned adjacent the fourth sides of the first and second filter media panels.

In one embodiment, the third side of the support frame is captured in the first end cap structure and the fourth side of the support frame is captured in the second end cap structure.

In one embodiment, the filter element includes a second side support structure adjacent the second sides of the first and second media panels and the support frame. The second side support structure extends between first and second ends. The first end is captured in the first end cap structure and the second end is captured in the second end cap structure.

In one embodiment, the first and second filter media panels are pleated media panels. At least one pleat of the first and second filter media panels is pinched between the second side of the support frame and the second side support structure.

In one embodiment, a seal material is interposed between the second side of the support frame and the second side support structure. The seal material seals the second side of the first and second filter media panels to at least one of the second side of the support frame and the second side support structure.

In one embodiment, the second side support structure includes a handle member.

In one embodiment, the second side of the support frame overlaps, at least in part, the second sides of the first and second filter media panels.

In one embodiment, a housing seal is carried by the base frame for operably sealing the filter element to a housing structure.

The first and second end cap structures are each composite structures including a cupped end cap and adhesive within the cupped end cap. At least the adhesive captures the corresponding side of the support frame, portion of the base frame and sealing the corresponding sides of the first and second filter media panel.

In one embodiment, the first and second end cap structures are formed from rigid urethane. The rigid urethane captures the corresponding side of the support frame, portion of the base frame and sealing the corresponding sides of the first and second filter media panel.

In one embodiment, the first sides of the first and second filter media panels are sealingly attached to the base frame.

In one embodiment, the first side of the support frame defines a second opening in fluid communication with the cavity between the first and second filter media panels.

In one embodiment, the first, second, third, and fourth sides of the support frame bound first and second flow openings. The first flow opening being adjacent the first filter media panel and the second flow opening being adjacent the second filter media panel.

In one embodiment, the first and second filter media panels define interior faces. The interior faces of the first and second filter media panels generally facing each other.

In one embodiment, the support frame and base frame maintain the interior faces of the first and second filter media panels in a non-parallel orientation with the first sides of the first and second panels spaced part from one another at a greater distance than the second sides of the first and second panels such that the cavity is generally wedge shaped.

In one embodiment, each of the first and second portions of the base frame defines first and second tapered locating surfaces. The first side of the first filter media panel is supported on the first tapered locating surfaces and the first side of the second filter media panel supported on the second tapered locating surfaces.

In one embodiment, the first tapered locating surfaces are substantially parallel to the first side of the first filter media panel and the second tapered locating surfaces are substantially parallel to the first side of the second filter media panel.

In one embodiment, the first tapered locating surfaces are substantially perpendicular to the interior face of the first filter media panel and the second tapered locating surfaces are substantially perpendicular to the interior face of the second filter media panel.

In one embodiment, the first and second filter media panels are pleated media panels formed from a sheet of filter media having a plurality of panels formed by alternating folds, the folds extending longitudinally between the third and fourth sides of the filter media panels, the first side of the filter media panels being adjacent the base frame and the second side of the filter media panel being spaced apart from the first side and the base frame, the third and fourth sides of the filter media panels extending between the first and second sides.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a perspective illustration of a first embodiment of a filter element according to the invention;
FIG. 2 is a partial perspective illustration of the filter element of FIG. 1;
FIG. 3 is an exploded illustration of the filter element of FIG. 1;
FIG. 4 partial perspective illustration of the filter element of FIG. 1;
FIG. 5 is an enlarged partial illustration of the filter element of FIG. 1;
FIG. 6 is an enlarged partial illustration of the filter element of FIG. 1;
FIG. 7 is partial cross-sectional illustration of the filter element of FIG. 1;
FIG. 8 is an enlarged partial cross-sectional illustration of the filter element of FIG. 1;
FIG. 9 is a partial perspective illustration of another embodiment of a filter element according to the invention;
FIG. 10 is a partial perspective illustration of the filter element of FIG. 9;
FIG. 11 is a perspective illustration of another embodiment of a filter element according to the invention;
FIG. 12 illustrates the base frame of the filter element of FIG. 1;
FIG. 13 illustrates the support frame of the filter element of FIG. 1;
FIG. 14 is a partial perspective illustration of an alternative embodiment of a filter element according to the invention; and
FIG. 15 is a partial perspective illustration of an alternative embodiment of a filter element according to the invention.

While the invention will be described in connection with certain preferred embodiments, there is no intent to limit it to those embodiments. On the contrary, the intent is to cover all alternatives, modifications and equivalents as included within the scope of the invention as defined by the appended claims.

### DETAILED DESCRIPTION OF THE INVENTION

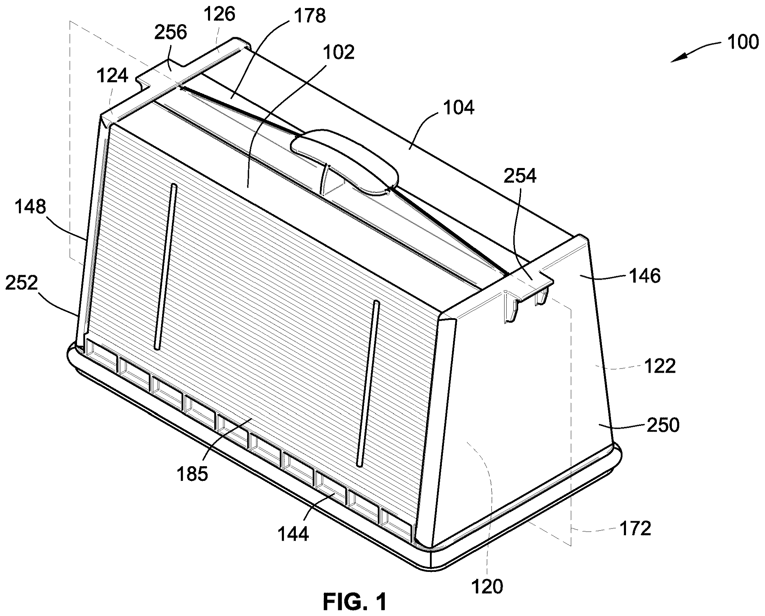

FIG. 1 is a perspective illustration of an embodiment of a filter element 100 for filtering air. The filter element 100 will filter fluid such as air as it is passed therethrough to remove particulates and impurities carried by the fluid being filtered.

The filter element 100 includes a pair of filter media panels 102, 104 through which the fluid passes that performs the filtering. The filter media panels 102, 104 may be formed from various different types of filter media and in one embodiment the filter media panels 102, 104 are provided by pleated filter media. The pleated filter media is formed by a plurality of adjacent panels connected to one another at a plurality of alternating folds in an accordion fashion.

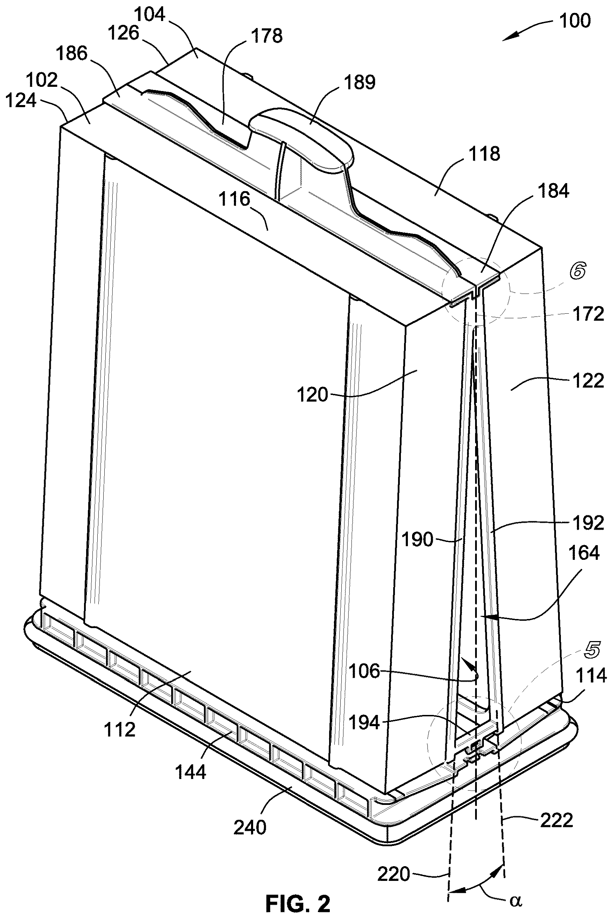

With reference to FIG. 2, the filter media panels 102, 104 are mounted to a multi-component holding assembly and oriented such that the filter media panels extend at an angle α relative to one another. Due at least to the angle α between the filter media panels 102, 104, the filter media panels 102, 104 form a cavity 106 therebetween.

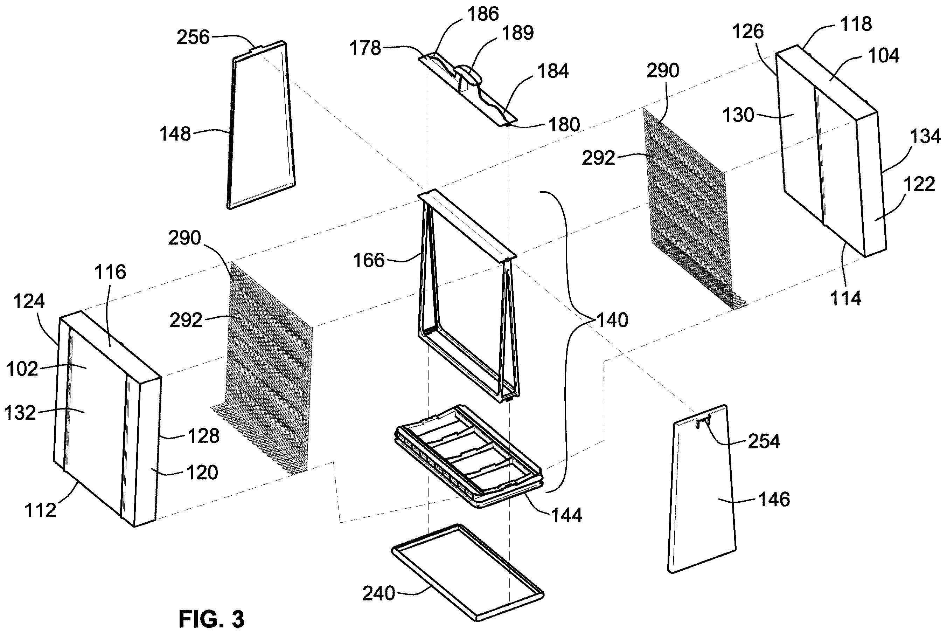

With reference to FIG. 3, the filter media panels 102, 104 each have a generally rectangular periphery including a first side 112, 114, a second side 116, 118, a third side 120, 122 and a fourth side 124, 126. The filter media panels 102, 104 also include inner faces 128, 130 that face one another when assembled and outer faces 132, 134 that face away from one another when assembled. The faces are bounded by the first 112, 114, second 116, 118, third 120, 122 and fourth 124, 126 sides. The inner and outer faces 128, 130, 132, 134 may be considered flow faces as the primary fluid flow through the filter media panels 102, 104 is through these faces 128, 130, 132, 134.

The multi-component holding assembly 140 is configured to mount the filter media panels 102, 104 in the desired orientation. The multi-component holding assembly 140 of the illustrated embodiment generally includes a support frame 142, a base frame 144, first and second end cap structures 146, 148 and a second side support structure 178.

The support frame 142 generally maintains the first and second filter media panels in the desired spaced orientation such that cavity 106 (FIG. 2) is formed. In the illustrated embodiment, the spaced orientation is angled at angle α as indicated previously. In this configuration, the interior faces 128, 130 are maintained in a non-parallel, non-perpendicular orientation with the first sides 112, 114 of the first and second filter media panels 102, 104 spaced apart from one another a greater distance than the second sides 116, 118. This orientation gives cavity 106 a wedge shape.

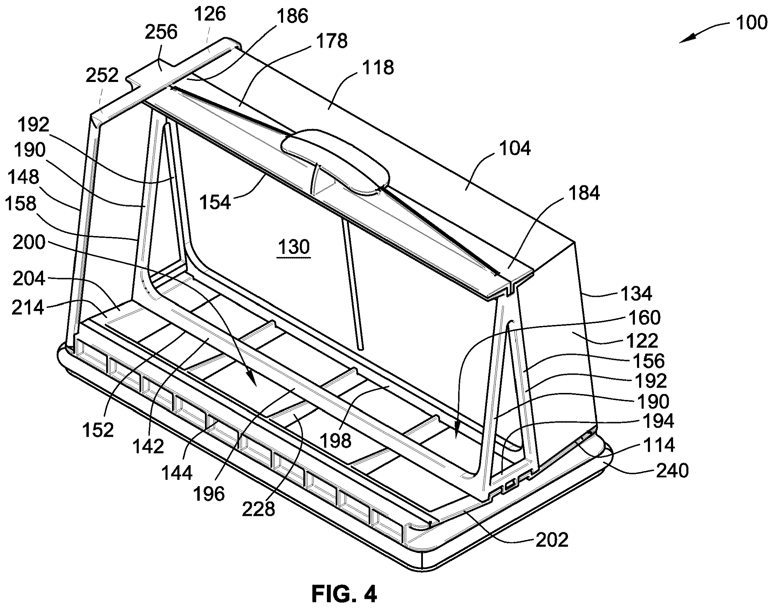

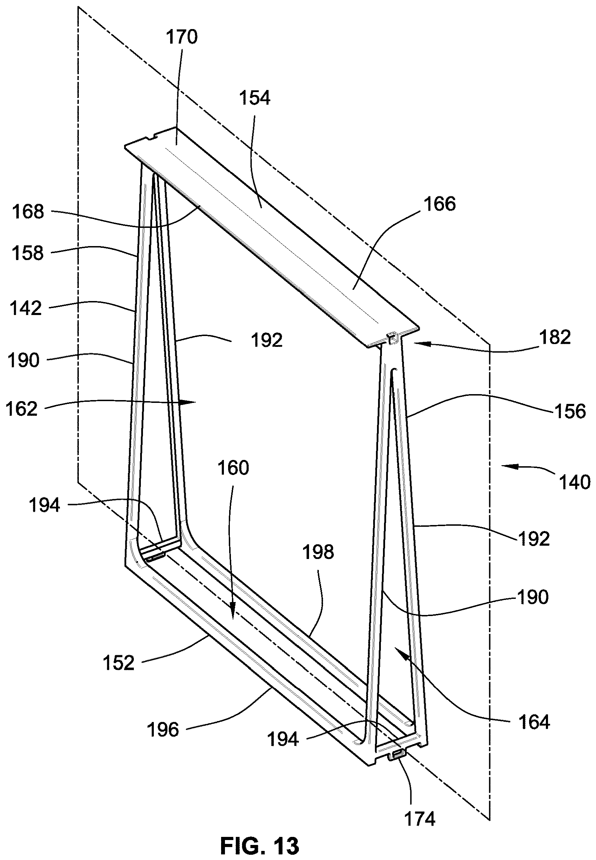

With additional reference to FIG. 13, the support frame 142 generally defines first, second, third and fourth sides 152, 154, 156, 158. The first and second sides 152, 154 are generally offset from one another and extend between the third and fourth sides 156, 158. With additional reference to FIG. 4 (which has filter media panel 102 and end cap structure 146 removed for clarity, in the assembled state, the first side 152 of the support frame 142 is adjacent the first sides 112, 114 of the filter media panels 102, 104, the second side 154 of the support frame 142 is adjacent the second sides 116, 118 of the filter media panels 102, 104, the third side 156 of the support frame 142 is adjacent the third sides 120, 122 of the filter media panels 102, 104 and the fourth side 158 of the support frame 142 is adjacent the fourth sides 124, 126 of the filter media panels 102, 104.

In this embodiment, the first side 152 of the support frame 142 defines a first side opening 160 through which fluid flows during the filtering process to exit cavity 106 between the filter media panels 102, 104. The first, second, third and fourth sides 152, 154, 156, 158 of the support frame 142 also bound first and second flow openings 162, 164 that are adjacent to filter media panels 102, 104, respectively, when assembled, through which fluid flows prior to or after passing through corresponding filter media panels 102, 104 depending on if the filter element 100 is configured for inside-out or outside-in fluid flow.

The support frame 142, in the illustrated embodiment, includes an overlap portion 166 that has opposite first and second flange portions 168, 170 that extend laterally outward in opposite directions. The first and second flange portions 168, 170 extend laterally outward such that the overlap portion 166 overlaps at least a portion of each of the second sides 116, 118 of the first and second filter media panels 102, 104. The bottom surfaces of the flange portions 168, 170 adjacent the filter media panels 102, 104 may be angled relative to a central bisecting plane 172 of the support frame 142 at an angle equivalent to angle α/2 plus ninety degrees.

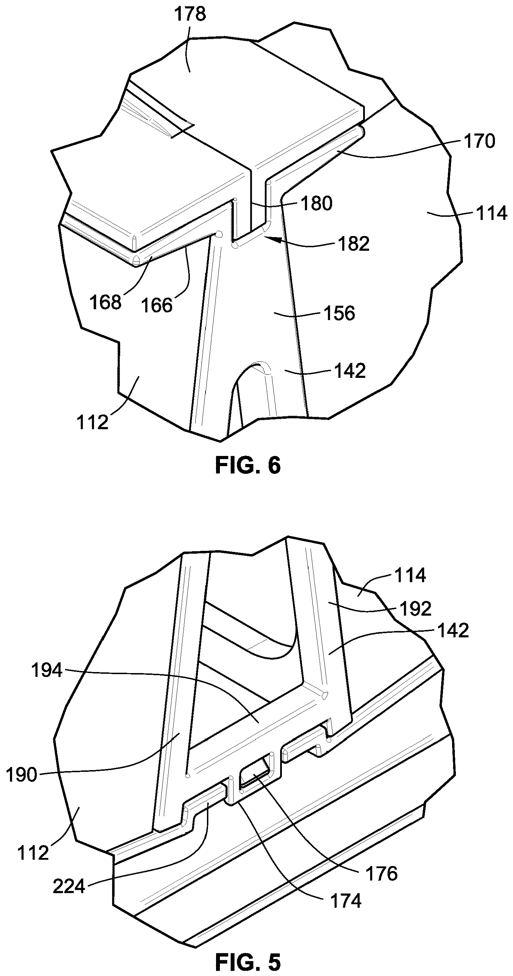

The support frame 142 is operably connected to the base frame 144. The support frame 142 in the illustrated embodiment includes snap structures 174 that snap engage corresponding snap structures 176 of the base frame 144. In the illustrated embodiment, snap structures 174 are provided by apertures formed in a portion of the support frame 142 proximate the intersection of the first side 152 with the third and fourth sides 156, 158. Snap structures 176 are outward extending projections sized and positioned to extend into the apertures provided by snap structures 174. The projections provided by the snap structures 176 may have tapers or ramps to facilitate connecting the support frame 142 to the base frame 144. Engagement of the snap structures 174 with snap structures 176 is illustrated in FIG. 5.

In alternative embodiments, the snap structures could be reversed and other cooperating snap structures are contemplated. The snap engagement facilitates initial assembly of the multi-component holding assembly 140 prior to mounting of the filter media panels 102, 104.

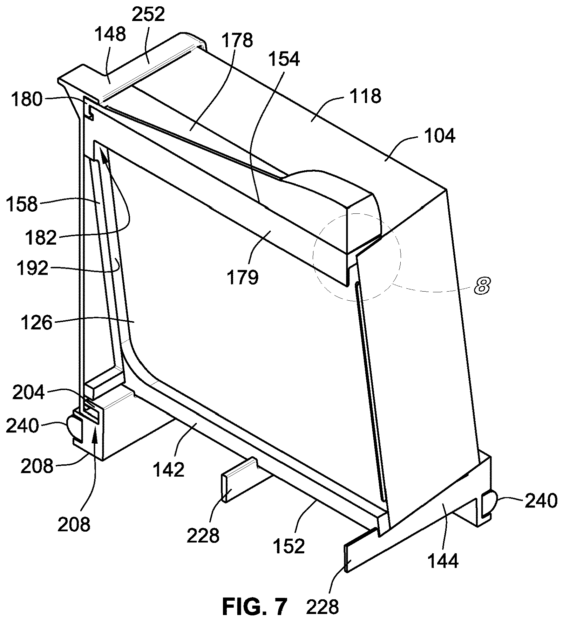

A second side support structure 178 is operably connected to the second side 154 of the support frame 142. The second side support structure 178 includes connection elements 180 that extend into recesses 182 (also referred to as receptacles) formed in the support frame 142. Preferably, the fit between the connection elements 180 and the recesses provides a snap engagement. The second side support structure 178 extends between opposed first and second ends 184, 186 with a connection element 180 at each end. The cooperating catch arrangement of the connection elements 180 and recesses 182 may include catches or undercuts to form an improved connection between the support frame 142 and the second side support structure 178 such as illustrated in FIG. 7.

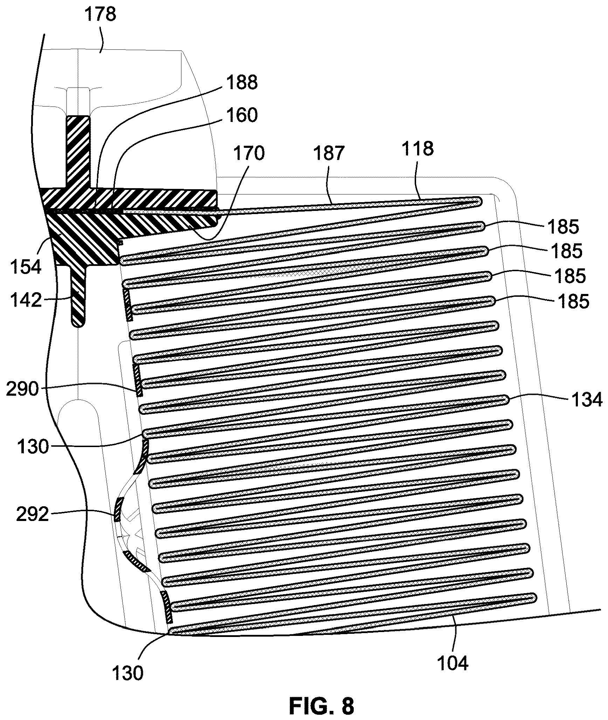

The second side support structure 178 overlaps the flange portions 168, 170 of the support frame 142. With additional reference to FIG. 8, in one embodiment where the filter media panels 102, 104 are formed from pleated media with the folds 185 (see FIG. 1) of the pleated media extending perpendicularly between the third and fourth sides 120, 122, 124, 126 of the filter media panels, at least one panel 187 of each filter media panel 102, 104 is pinched between a top surface of the corresponding flange portion 102, 104 and a bottom surface of the second side support structure 178. A seal material 188, such as a glue bead or adhesive is applied to seal the portion of the pleated media between the second side support structure 178 and the second side 154, e.g. flange portions 168, 170, to seal the filter media panels 102, 104 along the second sides 116, 118 thereof. The seal material 188 will also help secure the second side support structure to the second side 154 of the support frame 142. The support frame 142 defines a second side stop 179 that extends between the third and fourth sides 156, 158 against which the inner faces 128, 130 of the first and second filter media panels 102, 104 proximate the second sides 116, 118 thereof rest when in an assembled state.

The second side support structure 178 (also referred to as a handle member) includes a handle 189 including a gripping portion configured to be grasped by a user to remove the filter element 100 at maintenance intervals. The handle 189 is located axially between the opposed first and second ends 184, 186 of the second side support structure 178.

With reference to FIG. 13, in the illustrated embodiment, the third and fourth sides 156, 158 are formed from frame segments including a pair of converging elongated segments 190, 192 and a cross-brace segment 194 that extends between the elongated segments 190, 192. The pair of converging elongated segments 190, 192 for the third and fourth sides 156, 158 converge proximate the second side 154. The snap structures 174 are formed as part of the cross brace segments 194.

The first side 152 of the support frame is defined by the cross-brace segments 194 and a pair of first side elongated segments 196, 198 that extend generally parallel to one another between the third and fourth sides 156, 158 in a spaced apart relation.

The support frame opening is defined by the cross-brace segments 194 and the pair of first side elongated segments 196, 198.

When assembled, the inner faces 128, 130 of the first and second filter media panels may rest against the elongated segments 190, 192 and 196, 198.

The base frame 144 cooperates with the support frame 142 to support the filter media panels 102, 104. The base frame 144 supports a first side 112, 114 of the filter media panels 102, 104.

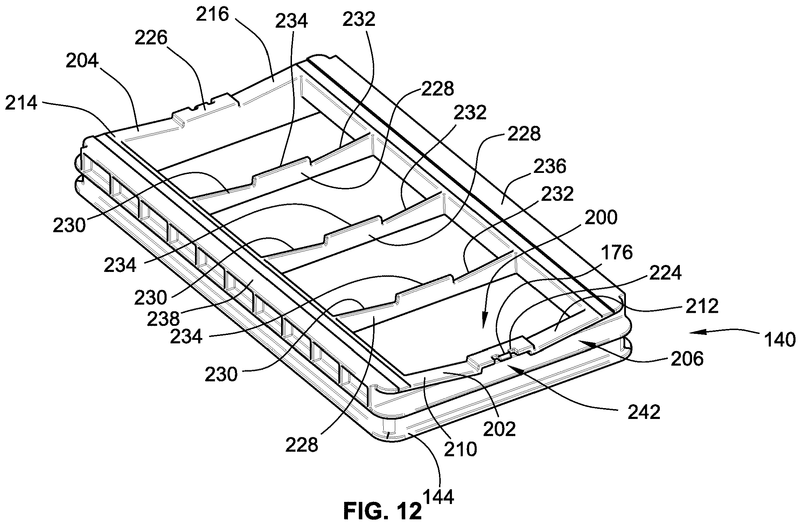

With reference to FIG. 3 and primary reference to FIG. 12, the base frame 144 defines a base frame opening 200 through which dirty fluid enters or clean fluid exits the filter element based on the flow direction of the fluid through the filter element. More than one base frame opening may be provided if multiple sets of filter media panels are mounted to a single base frame 144.

In the illustrated embodiment, the base frame 144 includes a pair of opposed captured portions in the form of first and second outward extending flanges 202, 204. The outward extending flanges 202, 204 extend away from one another on opposite sides of the base frame opening 200 and form under cuts 206, 208.

Locating surfaces 210, 212, 214, 216 of the outward extending flanges 202, 204 support opposed ends of the first sides 112, 114 of the filter media panels 102, 104. In the illustrated embodiment, the locating surfaces 210, 212, 214, 216 are tapered relative to central plane 172 at angle of 90 minus angle α/2. As such, the locating surfaces are generally perpendicular to the planes 220, 222 (see FIG. 2) defined by the first, second, third and fourth sides 152, 154, 156 , 158 of the support frame 142 against which the first and second filter media panels 102, 104 rest when assembled. Locating surfaces 210, 214 that support the first filter media panel 102 are generally parallel to flange portion 168 of the support frame 142 as well as the first side 112 of the filter media panel 102 while locating surfaces 212, 216 support the first side 114 of filter media panel 104 and are general parallel to flange portion 170 of the support frame 142 as well as the first side 114 of filter media panel 104. The tapered locating surfaces are generally perpendicular to the inner and outer faces 128, 130, 132, 134 of the filter media panels 102, 104. Locating surfaces 210, 212 of the first flange 202 extend at a non-parallel non-perpendicular angle relative to one another as well as bisecting central plane 172. Locating surfaces 214, 216 of the first flange 204 extend at a non-parallel non-perpendicular angle relative to one another as well as bisecting central plane 172.

Flanges 202, 204 each define a corresponding elevated segment 224, 226 positioned between corresponding tapered locating surfaces 210, 212 and 214, 216. The elevated segments 224, 226 define snap structures 176 that cooperate with snap structures 174 as described above. The elevated segments 224, 226 are straddled by segments 196, 198 when assembled to assist in locating the support frame 142 relative to the base frame 144.

The base frame 144 includes support members 228 that have tapered surfaces 230, 232 similar to tapered locating surfaces 210, 212, 214, 216 and that facilitate support of the first sides 112, 114 of the filter media panels 102, 104 as well as elevated projections 234 (also referred to as tabs) for locating the elongated segments 196, 198. The support members 228 extend across base frame opening 200 between parallel extending side member portions 236, 238

The base frame 144 carries a sealing gasket 240 used to seal the filter element 100 to a filter housing (not shown). The sealing gasket 240 in the illustrated embodiment is a continuous piece of D-style rope stock. The sealing gasket 240 is carried in an annular groove 242 that circumscribes the base frame 144. In the illustrated embodiment, the sealing gasket 240 defines a radial seal. However, other embodiments could define an axial seal.

The first and second end cap structures 146, 148 assist in operably sealing the filter media panels 102, 104 to the support frame 142 and/or base frame 144 to prevent fluid from bypassing the filter media panels 102, 104.

The first end cap structure 146 operably seals the third sides 120, 122 of the filter media panels 102, 104 and the second end cap structure 148 operably seals the fourth sides 124, 126.

The first outward extending flange 202 of the base frame 144 is captured in the first end cap structure 146 while the second outward extending flange 204 of the base frame 144 is captured in the second end cap structure 148. Not only are the first and second outward extending flanges 202, 204 captured by the first and second end cap structures 146, 148, but the third side 156 of the support frame 142 is captures by the first end cap structure 146 while the fourth side 158 of the support frame 142 is captured by the second end cap structure 148.

In an embodiment, the first and second end cap structures 146, 148 are composite structures with each including a cupped end cap 250, 252 and adhesive within the cupped end cap 250, 252. The cupped end caps 250, 252 form wells for holding the adhesive. The adhesive may be a foamed urethane or known potting material other materials include hot melt, plastisol, epoxy, non-foamed urethane, etc. The adhesive of the first end cap structure 146 captures the third sides 120, 122 of the filter media panels 102, 104, the first outward extending flange 202, the third side 156 of the support frame 142 and the first end 184 of the second side support structure 178. The adhesive of the second end cap structure 148 captures the fourth sides 124, 126 of the filter media panels 102, 104, the second outward extending flange 204, the fourth side 158 of the support frame 142 and the second end 186 of the second side support structure 178.

The cupped end caps 250, 252 also each include outward extending mounting flanges 254, 256 for assisting in mounting the filter element 100 in a filter housing (not shown).

In addition to the adhesive of the end cap structures 146, 148, sealant beads may be applied between the first sides 112, 114 of the filter media panels 102, 104 and the base frame 144 to sealingly secure the filter media panels 102, 104 to the base frame 144. To further support the filter media panels 102, 104, adhesive may be applied to the tapered surfaces 230, 232 of the support members 228 as well as to the top surfaces of side members 236, 238. Further yet, adhesive is applied to the second sides 116, 118 of the filter media panels 102, 104 and the second side 154 of the support frame 142 as described above.

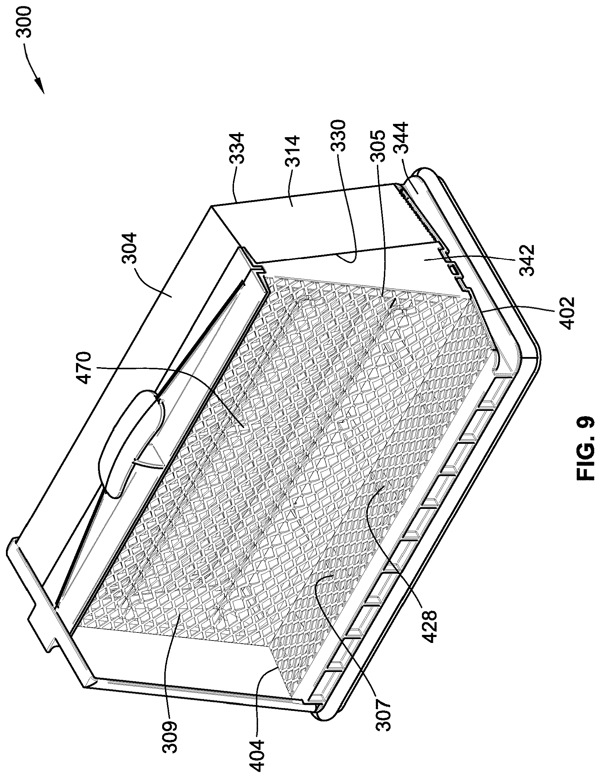

In FIG. 3, an optional support screens 290 are illustrated that will be positioned between the first and second filter media panels 102, 104 and the support frame 142 and the base frame 144 as will be described in more detail with regard to the embodiment of FIG. 9 described below. The support screens 290 are formed from an expanded metal to form the through apertures and include embossed rib structures 292. The rib structures 292 are pressed into the support screens 290 to provide increased support for the filter media panels 102, 104. While illustrated as being horizontal rib structures 292 that extend longitudinally between the third and fourth sides 120, 122, 124, 126 of the filter media panels 102, 104 when assembled, the rib structures 292 could have other orientations and shapes. For instance, they could extend vertically, e.g. between first and second sides 112, 114, 116, 118 or could be diagonal or form an X-shape. Preferably, the rib structures 292 extend inward and away from the corresponding media panels 102, 104 so that the rib structures 292 do not interfere with mounting or locating of the filter media panels 102, 104.

This embodiment is also illustrated with optional pleat stabilizers mounted on the inner and outer faces of the filter media panels. The pleat stabilizers may be in the form of molded components mounted to the filter media panels or could be hot melt or urethane beads applied to the filter media panels in a direction extending generally transverse to the edges/tips of the pleats when pleated media is used.

The features of the aforementioned support screens 290 and pleat stabilizers can be equally applied to all embodiments herein, where appropriate and not directly contradicted.

FIG. 9 illustrates a further embodiment of a filter element 300 according to the teachings of the present invention. This embodiment is substantially similar to the prior embodiment and only the primary differences will be described. Where not contradicted by context, the features of this embodiment may be used with the structure of the prior embodiment. One of the filter media panels and end cap structures has been removed for ease of understanding.

This filter element 300 is generally designed for an outside-in flow. As such, fluid will flow through the outer faces 334 of the filter media panels 304 (only one is shown) first and then exit the filter element 300 through base from opening 400 formed in the bottom of the base frame 344.

To provide improved support of the filter media panels 304, first and second support screens 305 are provided. Only one of the support screens 305 is readily visible. This support screen 305 would support the filter media panel that has been removed. However, a similar support screen 305 supports filter media panel 304 that is illustrated.

The support screens 305 are positioned between the support frame 342 and base frame 344 and the filter media panels 304. The support frame 342 and base frame 344 support the support screens 305. In the illustrated embodiment, the support screens 305 are generally L-shaped having a first side portion 307 and an inner face portion 309. The first side portion 307 is positioned adjacent the first sides 314 of the filter media panels 304 as well as the outward extending flanges 402, 404 and support members 428. The inner face portion 309 is positioned adjacent the inner faces 130 of the filter media panels 304.

In some embodiments, the first side portion 307 and inner face portion 309 of the support screens are formed from a single piece of material bent to correspond to the L-shape formed by the connected support frame 342 and base frame 344. In alternative embodiments, the first side portion 307 and inner face portion 309 may be formed from separate pieces of screen. Preferably, the support screens are formed from embossed expanded screen material.

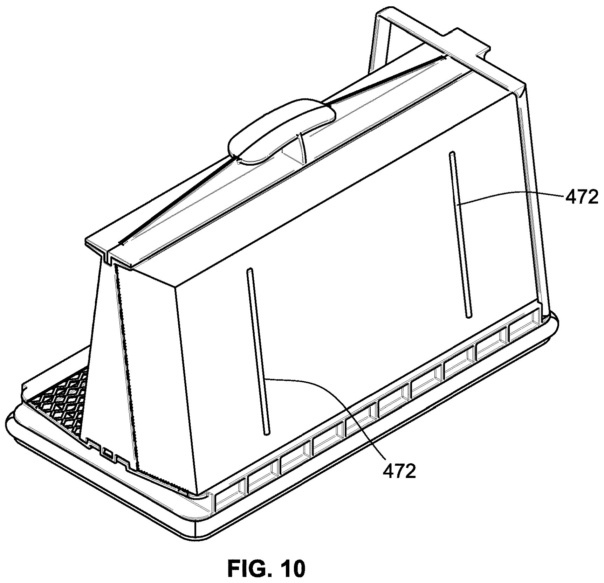

With additional reference to FIG. 10, this embodiment also utilizes pleat stabilizers 472 when the filter media panels are formed from pleated filter media. The pleat stabilizers 472 provide support to the filter media due to a pressure drop across the filter media panels. The pleat stabilizers 472 may also maintain a desired spacing of the adjacent pleats.

While the end cap structures of the prior embodiments are described as multi-component end caps, other embodiments may utilize one-piece end caps. For instance, the end cap could be formed from a single piece of rigid urethane that is formed around the various components that are to be captured by the end cap structures discussed previously.

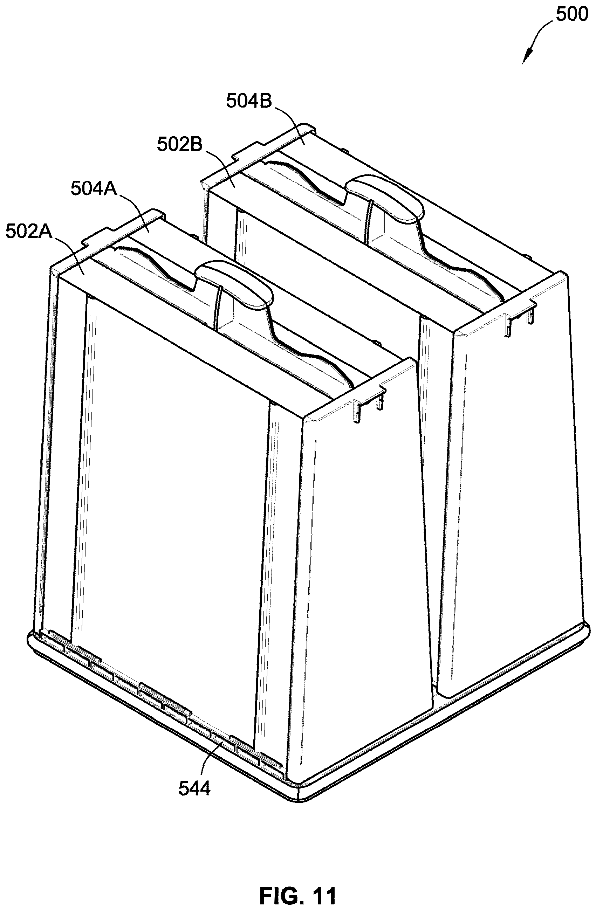

FIG. 11 illustrates a further embodiment of a filter element 500. This embodiment is similar to and can include substantially all of the features of the prior embodiments. However, this embodiment utilizes two banks of filter media panels 502A, 504A and 502B, 504B mounted to a single base frame 544.

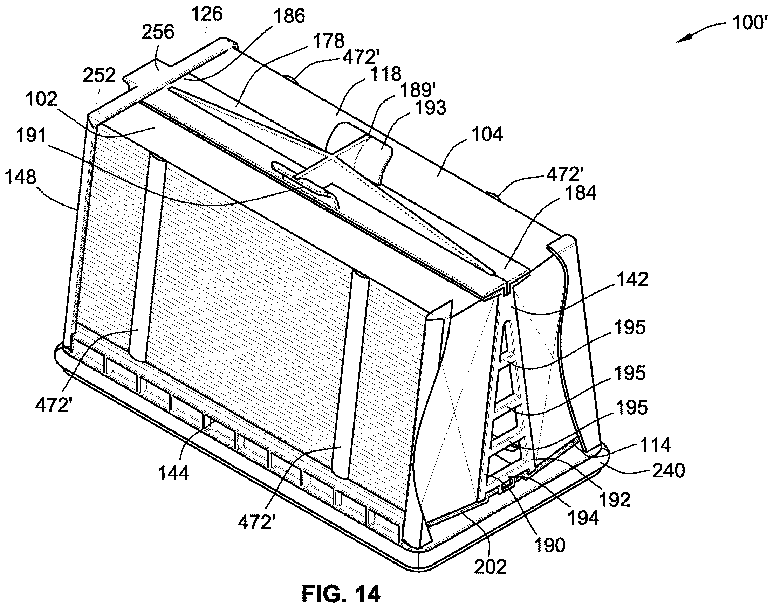

FIG. 14 is a partial perspective illustration of a further embodiment of a filter element 100'. This embodiment is similar to and can include substantially all of the features of the prior embodiments. The filter element 100' has an alternative handle 189' having first and second curved portions 191, 193. The filter element 100' has pleat stabilizers 472' extending the entire length of the filter media panels 102,104. In addition, the filter element 100' has intermediate cross-braces 195 that extend between the converging elongated segments 190, 192 that provide additional structural support to the support frame 142. It will be readily understood that the handle 189', pleat stabilizers 472' and cross-braces 195 can be used individually or in combination with any of the embodiments disclosed herein.

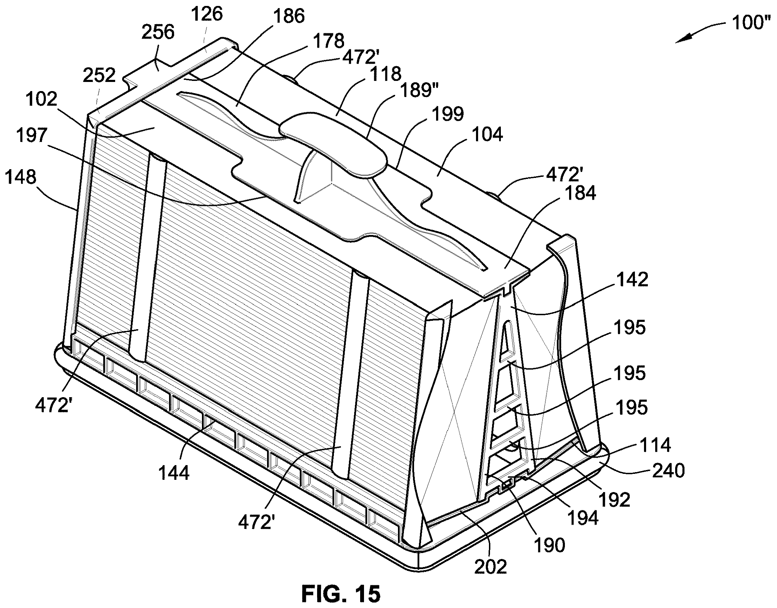

FIG. 15 is a partial perspective illustration of a further embodiment of a filter element 100". This embodiment is similar to and can include substantially all of the features of the prior embodiments. The filter element 100" has an alternative handle 189" having first and second handle base flanges 197, 199. The filter element 100" has pleat stabilizers 472' extending the entire length of the filter media panels 102,104. In addition, the filter element 100" has intermediate cross-braces 195 that extend between the converging elongated segments 190, 192 that provide additional structural support to the support frame 142. It will be readily understood that the handle 189", the first and second handle base flanges 197, 199, pleat stabilizers 472' and cross-braces 195 can be used individually or in combination with any of the embodiments disclosed herein.

## Claims

1. A filter element (100) comprising:
first and second filter media panels (102, 104), each filter media panel defining a first (112, 114), a second (116, 118), a third (120, 122) and a fourth (124, 126) side, for each filter media panel, the first and second sides are offset from one another and extend between the third and fourth sides which are offset from one another;
a support frame (142) maintaining the first and second filter media panels in a generally spaced orientation forming a cavity (106) therebetween;
a base frame (144) defining a first opening (200) in fluid communication with the cavity; and
first and second end cap structures (146, 148), the first end cap structure operably sealing the third side of the first and second filter media panels and the second end cap structure operably sealing the fourth side of the first and second filter media panels, the base frame having a first portion (202) captured in the first end cap structure and a second portion (204) captured in the second end cap structure,
wherein the first and second end cap structures (146, 148) are each composite structures including a cupped end cap and adhesive within the cupped end cap, at least the adhesive capturing the corresponding side (156, 158) of the support frame (142) and the respective portion (202, 204) of the base frame (144) and sealing the corresponding sides (120, 122; 124, 126) of the first and second filter media panel (102, 104).

2. The filter element (100) of claim 1, wherein the first portion (202) of the base frame (144) is a first outward extending flange that is received in the first end cap structure (146) and the second portion (204) of the base frame is a second outward extending flange that is received in the second end cap structure (148), the first and second flanges being on opposite sides of the first opening (200) and extending outward away from one another.

3. The filter element (100) of claim 1, wherein the support frame (142) defines first (152), second (154), third (156), and fourth (158) sides, the first and second sides are offset from one another and extend between the third and fourth sides, the first side of the support frame being positioned adjacent the first sides (112, 114) of the first and second filter media panels (102, 104); the second side of the support frame being positioned adjacent the second sides (116, 118) of the first and second filter media panels; the third side of the support frame being positioned adjacent the third sides (120, 122) of the first and second filter media panels; the fourth side of the support frame being positioned adjacent the fourth sides (124, 126) of the first and second filter media panels.

4. The filter element (100) of claim 3, wherein the third side (156) of the support frame (142) is captured in the first end cap structure (146) and the fourth side (158) of the support frame (142) is captured in the second end cap structure (148).

5. The filter element (100) of claim 3, further comprising a second side support structure (178) adjacent the second sides (116, 118; 154) of the first and second media panels (102, 104) and the support frame (142), the second side support structure extending between first and second ends (184, 186), the first end being captured in the first end cap structure (146) and the second end being captured in the second end cap structure (148).

6. The filter element (100) of claim 5, wherein the first and second filter media panels (102, 104) are pleated media panels, wherein at least one pleat (185, 187) of the first and second filter media panels is pinched between the second side (154) of the support frame (142) and the second side support structure (178); optionally wherein the filter element further includes a seal material (188) interposed between the second side of the support frame and the second side support structure, the seal material sealing the second side of the first and second filter media panels to at least one of the second side of the support frame and the second side support structure.

7. The filter element (100) of claim 5, wherein the second side support structure (178) includes a handle member (189).

8. The filter element (100) of claim 3, wherein the second side (154) of the support frame (142) overlaps, at least in part, the second sides (116, 118) of the first and second filter media panels (102, 104).

9. The filter element (100) of claim 1, further comprising a housing seal (240) carried by the base frame (144) for operably sealing the filter element to a housing structure.

10. The filter element (100) of claim 1, wherein the first and second end cap structures (146, 148) are formed from rigid urethane, the rigid urethane capturing the corresponding side (156, 158) of the support frame (142), portion (202, 204) of the base frame (144) and sealing the corresponding sides (120, 122; 124, 126) of the first and second filter media panel (102, 104).

11. The filter element (100) of claim 1, wherein the first sides (112, 114) of the first and second filter media panels (102, 104) are sealingly attached to the base frame (144).

12. The filter element (100) of claim 1, wherein the first side (112, 114) of the support frame (142) defines a second opening (200) in fluid communication with the cavity (106) between the first and second filter media panels (102, 104); optionally wherein the first (152), second (154), third (156), and fourth (158) sides of the support frame (142) bound first and second flow openings (162, 164), the first flow opening being adjacent the first filter media panel and the second flow opening being adjacent the second filter media panel; optionally wherein the first and second filter media panels are pleated media panels formed from a sheet of filter media having a plurality of panels (187) formed by alternating folds (185), the folds extending longitudinally between the third (120, 122) and fourth (124, 126) sides of the filter media panels (102, 104), the first side of the filter media panels being adjacent the base frame (144) and the second side of the filter media panel being spaced apart from the first side and the base frame, the third and fourth sides of the filter media panels extending between the first and second sides; optionally wherein a second side support structure is provided adjacent the second sides of the first and second media panels and the support frame; a portion of the sheet of filter media extending between the support frame and the second side support structure.

13. The filter element (100) of claim 1, wherein the first and second filter media panels (102, 104) define interior faces (128, 130), the interior faces of the first and second filter media panels generally facing each other; optionally wherein the support frame (142) and base frame (144) maintains the interior faces of the first and second filter media panels in a non-parallel orientation with the first sides (112, 114) of the first and second panels spaced part from one another at a greater distance than the second sides (116, 118) of the first and second panels such that the cavity (106) is generally wedge shaped; optionally wherein each of the first (202) and second (204) portions of the base frame (144) defines first and second tapered locating surfaces (210, 214; 212, 216), the first side (112) of the first filter media panel (102) supported on the first tapered locating surfaces (210, 214) and the first side (114) of the second filter media panel (104) supported on the second tapered locating surfaces (212, 216).

14. The filter element (100) of claim 13, wherein: the first tapered locating surfaces (210, 214) are substantially parallel to the first side (112) of the first filter media panel (102) and the second tapered locating surfaces (212, 216) are substantially parallel to the first side (114) of the second filter media panel (104); or the first tapered locating surfaces are substantially perpendicular to the interior face (128) of the first filter media panel and the second tapered locating surfaces are substantially perpendicular to the interior face (130) of the second filter media panel.

## Patentansprüche

1. Ein Filterelement (100), das Folgendes beinhaltet:
eine erste und zweite Filtermedienplatte (102, 104), wobei jede Filtermedienplatte eine erste (112, 114), eine zweite (116, 118), eine dritte (120, 122) und eine vierte (124, 126) Seite definiert, wobei für jede Filtermedienplatte die erste und zweite Seite zueinander versetzt sind und sich zwischen der dritten und vierten Seite erstrecken, die zueinander versetzt sind;
einen Stützrahmen (142), der die erste und zweite Filtermedienplatte in einer im Allgemeinen beabstandeten Ausrichtung hält und einen Hohlraum (106) zwischen diesen bildet;
einen Basisrahmen (144), der eine erste Öffnung (200) in Fluidverbindung mit dem Hohlraum definiert; und
eine erste und zweite Endkappenstruktur (146, 148), wobei die erste Endkappenstruktur die dritte Seite der ersten und zweiten Filtermedienplatte betriebswirksam abdichtet und die zweite Endkappenstruktur die vierte Seite der ersten und zweiten Filtermedienplatte betriebswirksam abdichtet, wobei der Basisrahmen einen ersten Abschnitt (202), der in der ersten Endkappenstruktur erfasst ist, und einen zweiten Abschnitt (204), der in der zweiten Endkappenstruktur erfasst ist, aufweist,
wobei die erste und zweite Endkappenstruktur (146, 148) jeweils Verbundstrukturen sind, die eine becherförmige Endkappe und Klebstoff innerhalb der becherförmigen Endkappe umfassen, wobei mindestens der Klebstoff die entsprechende Seite (156, 158) des Stützrahmens (142) und den jeweiligen Abschnitt (202, 204) des Basisrahmens (144) erfasst und die entsprechenden Seiten (120, 122; 124, 126) der ersten und zweiten Filtermedienplatte (102, 104) abdichtet.

2. Filterelement (100) gemäß Anspruch 1, wobei der erste Abschnitt (202) des Basisrahmens (144) ein erster sich nach außen erstreckender Flansch ist, der in der ersten Endkappenstruktur (146) aufgenommen ist, und der zweite Abschnitt (204) des Basisrahmens ein zweiter sich nach außen erstreckender Flansch ist, der in der zweiten Endkappenstruktur (148) aufgenommen ist, wobei sich der erste und zweite Flansch auf gegenüberliegenden Seiten der ersten Öffnung (200) befinden und sich voneinander weg nach außen erstrecken.

3. Filterelement (100) gemäß Anspruch 1, wobei der Stützrahmen (142) eine erste (152), zweite (154), dritte (156) und vierte (158) Seite definiert, wobei die erste und zweite Seite zueinander versetzt sind und sich zwischen der dritten und vierten Seite erstrecken, wobei die erste Seite des Stützrahmens angrenzend an die ersten Seiten (112, 114) der ersten und zweiten Filtermedienplatte (102, 104) positioniert ist; die zweite Seite des Stützrahmens angrenzend an die zweiten Seiten (116, 118) der ersten und zweiten Filtermedienplatte positioniert ist; die dritte Seite des Stützrahmens angrenzend an die dritten Seiten (120, 122) der ersten und zweiten Filtermedienplatte positioniert ist; und die vierte Seite des Stützrahmens angrenzend an die vierten Seiten (124, 126) der ersten und zweiten Filtermedienplatte positioniert ist.

4. Filterelement (100) gemäß Anspruch 3, wobei die dritte Seite (156) des Stützrahmens (142) in der ersten Endkappenstruktur (146) erfasst ist und die vierte Seite (158) des Stützrahmens (142) in der zweiten Endkappenstruktur (148) erfasst ist.

5. Filterelement (100) gemäß Anspruch 3, das ferner eine zweite Seitenstützstruktur (178) angrenzend an die zweiten Seiten (116, 118; 154) der ersten und zweiten Medienplatte (102, 104) und den Stützrahmen (142) beinhaltet, wobei sich die zweite Seitenstützstruktur zwischen einem ersten und zweiten Ende (184, 186) erstreckt, wobei das erste Ende in der ersten Endkappenstruktur (146) erfasst ist und das zweite Ende in der zweiten Endkappenstruktur (148) erfasst ist.

6. Filterelement (100) gemäß Anspruch 5, wobei die erste und zweite Filtermedienplatte (102, 104) Faltmedienplatten sind, wobei mindestens eine Falte (185, 187) der ersten und zweiten Filtermedienplatte zwischen der zweiten Seite (154) des Stützrahmens (142) und der zweiten Seitenstützstruktur (178) eingeklemmt ist; wobei das Filterelement optional ferner ein Dichtungsmaterial (188) umfasst, das zwischen der zweiten Seite des Stützrahmens und der zweiten Seitenstützstruktur eingelegt ist, wobei das Dichtungsmaterial die zweite Seite der ersten und zweiten Filtermedienplatte an mindestens einem von der zweiten Seite des Stützrahmens und der zweiten Seitenstützstruktur abdichtet.

7. Filterelement (100) gemäß Anspruch 5, wobei die zweite Seitenstützstruktur (178) ein Griffelement (189) umfasst.

8. Filterelement (100) gemäß Anspruch 3, wobei die zweite Seite (154) des Stützrahmens (142) mindestens teilweise die zweiten Seiten (116, 118) der ersten und zweiten Filtermedienplatte (102, 104) überlappt.

9. Filterelement (100) gemäß Anspruch 1, das ferner eine Gehäusedichtung (240) beinhaltet, die von dem Basisrahmen (144) getragen wird, um das Filterelement betriebswirksam an einer Gehäusestruktur abzudichten.

10. Filterelement (100) gemäß Anspruch 1, wobei die erste und zweite Endkappenstruktur (146, 148) aus starrem Urethan gebildet sind, wobei das starre Urethan die entsprechende Seite (156, 158) des Stützrahmens (142), einen Abschnitt (202, 204) des Basisrahmens (144) erfasst und die entsprechenden Seiten (120, 122; 124, 126) der ersten und zweiten Filtermedienplatte (102, 104) abdichtet.

11. Filterelement (100) gemäß Anspruch 1, wobei die ersten Seiten (112, 114) der ersten und zweiten Filtermedienplatte (102, 104) abdichtend an dem Basisrahmen (144) angebracht sind.

12. Filterelement (100) gemäß Anspruch 1, wobei die erste Seite (112, 114) des Stützrahmens (142) eine zweite Öffnung (200) in Fluidverbindung mit dem Hohlraum (106) zwischen der ersten und zweiten Filtermedienplatte (102, 104) definiert; wobei optional die erste (152), zweite (154), dritte (156) und vierte (158) Seite des Stützrahmens (142) eine erste und zweite Strömungsöffnung (162, 164) begrenzen, wobei die erste Strömungsöffnung an die erste Filtermedienplatte angrenzt und die zweite Strömungsöffnung an die zweite Filtermedienplatte angrenzt; wobei optional die erste und zweite Filtermedienplatte Faltmedienplatten sind, die aus einem Filtermedienblatt gebildet sind, das eine Vielzahl von Platten (187) aufweist, die durch abwechselnde Falten (185) gebildet sind, wobei sich die Falten in Längsrichtung zwischen der dritten (120, 122) und vierten (124, 126) Seite der Filtermedienplatten (102, 104) erstrecken, wobei die erste Seite der Filtermedienplatten an den Basisrahmen (144) angrenzt und die zweite Seite der Filtermedienplatte von der ersten Seite und dem Basisrahmen beabstandet ist, wobei sich die dritte und vierte Seite der Filtermedienplatten zwischen der ersten und zweiten Seite erstrecken; wobei optional eine zweite Seitenstützstruktur angrenzend an die zweiten Seiten der ersten und zweiten Medienplatte und den Stützrahmen bereitgestellt ist; wobei sich ein Abschnitt des Filtermedienblatts zwischen dem Stützrahmen und der zweiten Seitenstützstruktur erstreckt.

13. Filterelement (100) gemäß Anspruch 1, wobei die erste und zweite Filtermedienplatte (102, 104) Innenflächen (128, 130) definieren, wobei die Innenflächen der ersten und zweiten Filtermedienplatte im Allgemeinen einander zugewandt sind; wobei optional der Stützrahmen (142) und der Basisrahmen (144) die Innenflächen der ersten und zweiten Filtermedienplatte in einer nicht parallelen Ausrichtung halten, wobei die ersten Seiten (112, 114) der ersten und zweiten Platte in einem größeren Abstand voneinander beabstandet sind als die zweiten Seiten (116, 118) der ersten und zweiten Platte, sodass der Hohlraum (106) im Allgemeinen keilförmig ist; wobei optional jeder von dem ersten (202) und zweiten (204) Abschnitt des Basisrahmens (144) erste und zweite sich verjüngende Anlageflächen (210, 214; 212, 216) definiert, wobei die erste Seite (112) der ersten Filtermedienplatte (102) auf den ersten sich verjüngenden Anlageflächen (210, 214) gestützt wird und die erste Seite (114) der zweiten Filtermedienplatte (104) auf den zweiten sich verjüngenden Anlageflächen (212, 216) gestützt wird.

14. Filterelement (100) gemäß Anspruch 13, wobei: die ersten sich verjüngenden Anlageflächen (210, 214) im Wesentlichen parallel zu der ersten Seite (112) der ersten Filtermedienplatte (102) sind und die zweiten sich verjüngenden Anlageflächen (212, 216) im Wesentlichen parallel zu der ersten Seite (114) der zweiten Filtermedienplatte (104) sind; oder die ersten sich verjüngenden Anlageflächen im Wesentlichen senkrecht zu der Innenfläche (128) der ersten Filtermedienplatte sind und die zweiten sich verjüngenden Anlageflächen im Wesentlichen senkrecht zu der Innenfläche (130) der zweiten Filtermedienplatte sind.

## Revendications

1. Un élément filtrant (100) comprenant :
des premier et deuxième panneaux de média filtrant (102, 104), chaque panneau de média filtrant définissant un premier (112, 114), un deuxième (116, 118), un troisième (120, 122) et un quatrième (124, 126) côté, pour chaque panneau de média filtrant, le premier et le deuxième côté sont décalés l'un de l'autre et s'étendent entre les troisième et quatrième côtés qui sont décalés l'un de l'autre ;
un cadre de support (142) maintenant les premier et deuxième panneaux de média filtrant dans une orientation globalement espacée formant une cavité (106) entre eux ; un cadre de base (144) définissant une première ouverture (200) en communication fluidique avec la cavité ; et
des première et deuxième structures de coiffe d'extrémité (146, 148), la première structure de coiffe d'extrémité scellant fonctionnellement de manière étanche le troisième côté des premier et deuxième panneaux de média filtrant et la deuxième structure de coiffe d'extrémité scellant de manière étanche le quatrième côté des premier et deuxième panneaux de média filtrant, le cadre de base présentant une première portion (202) emprisonnée dans la première structure de coiffe d'extrémité et une deuxième portion (204) emprisonnée dans la deuxième structure de coiffe d'extrémité,
où les première et deuxième structures de coiffe d'extrémité (146, 148) sont chacune des structures composites incluant une coiffe d'extrémité en coupelle et de l'adhésif à l'intérieur de la coiffe d'extrémité en coupelle, au moins l'adhésif emprisonnant le côté correspondant (156, 158) du cadre de support (142) et les portions respectives (202, 204) du cadre de base (144) et scellant de manière étanche les côtés correspondants (120, 122 ; 124, 126) des premier et deuxième panneaux de média filtrant (102, 104).

2. L'élément filtrant (100) de la revendication 1, où la première portion (202) du cadre de base (144) est une première collerette s'étendant vers l'extérieur qui est reçue dans la première structure de coiffe d'extrémité (146) et la deuxième portion (204) du cadre de base est une deuxième collerette s'étendant vers l'extérieur qui est reçue dans la deuxième structure de coiffe d'extrémité (148), les première et deuxième collerettes étant sur des côtés opposés de la première ouverture (200) et s'étendant vers l'extérieur en s'éloignant l'une de l'autre.

3. L'élément filtrant (100) de la revendication 1, où le cadre de support (142) définit des premier (152), deuxième (154), troisième (156) et quatrième (158) côtés, les premier et deuxième côtés sont décalés l'un de l'autre et s'étendent entre les troisième et quatrième côtés, le premier côté du cadre de support étant positionné de manière adjacente aux premiers côtés (112, 114) des premier et deuxième panneaux de média filtrant (102, 104) ; le deuxième côté du cadre de support étant positionné de manière adjacente aux deuxièmes côtés (116, 118) des premier et deuxième panneaux de média filtrant ; le troisième côté du cadre de support étant positionné de manière adjacente aux troisièmes côtés (120, 122) des premier et deuxième panneaux de média filtrant ; le quatrième côté du cadre de support étant positionné de manière adjacente aux quatrièmes côtés (124, 126) des premier et deuxième panneaux de média filtrant.

4. L'élément filtrant (100) de la revendication 3, où le troisième côté (156) du cadre de support (142) est emprisonné dans la première structure de coiffe d'extrémité (146) et le quatrième côté (158) du cadre de support (142) est emprisonné dans la deuxième structure de coiffe d'extrémité (148).

5. L'élément filtrant (100) de la revendication 3, comprenant en outre une deuxième structure de support de deuxième côté (178) adjacente aux deuxièmes côtés (116, 118 ; 154) des premier et deuxième panneaux de média filtrant (102, 104) et au cadre de support (142), la structure de support de deuxième côté s'étendant entre des première et deuxième extrémités (184, 186), la première extrémité étant emprisonnée dans la première structure de coiffe d'extrémité (146) et la deuxième extrémité étant emprisonnée dans la deuxième structure de coiffe d'extrémité (148).

6. L'élément filtrant (100) de la revendication 5, où les premier et deuxième panneaux de média filtrant (102, 104) sont des panneaux de média à plissement, où au moins un pli (185, 187) des premier et deuxième panneaux de média filtrant est pincé entre le deuxième côté (154) du cadre de support (142) et la structure de support de deuxième côté (178) ; optionnellement où l'élément filtrant inclut en outre un matériau d'étanchéité (188) interposé entre le deuxième côté du cadre de support et la structure de support de deuxième côté, le matériau d'étanchéité scellant de manière étanche le deuxième côté des premier et deuxième panneaux de média filtrant à au moins soit le deuxième côté du cadre de support, soit la structure de support de deuxième côté.

7. L'élément filtrant (100) de la revendication 5, où la structure de support de deuxième côté (178) inclut une composante de poignée (189).

8. L'élément filtrant (100) de la revendication 3, où le deuxième côté (154) du cadre de support (142) chevauche, au moins en partie, les deuxièmes côtés (116, 118) des premier et deuxième panneaux de média filtrant (102, 104).

9. L'élément filtrant (100) de la revendication 1, comprenant en outre un joint d'étanchéité de boîtier (240) porté par le cadre de base (144) destiné à sceller fonctionnellement de manière étanche l'élément filtrant à une structure de boîtier.

10. L'élément filtrant (100) de la revendication 1, où les première et deuxième structures de coiffe d'extrémité (146, 148) sont formées à partir d'uréthane rigide, l'uréthane rigide emprisonnant le côté correspondant (156, 158) du cadre de support (142), des portions (202, 204) du cadre de base (144) et scellant de manière étanche les côtés correspondants (120, 122 ; 124, 126) des premier et deuxième panneaux de média filtrant (102, 104).

11. L'élément filtrant (100) de la revendication 1, où les premiers côtés (112, 114) des premier et deuxième panneaux de média filtrant (102, 104) sont fixés de manière étanche au cadre de base (144).

12. L'élément filtrant (100) de la revendication 1, où le premier côté (112, 114) du cadre de support (142) définit une deuxième ouverture (200) en communication fluidique avec la cavité (106) entre les premier et deuxième panneaux de média filtrant (102, 104) ; optionnellement où les premier (152), deuxième (154), troisième (156), et quatrième (158) côtés du cadre de support (142) délimitent des première et deuxième ouvertures d'écoulement (162, 164), la première ouverture d'écoulement étant adjacente au premier panneau de média filtrant et la deuxième ouverture d'écoulement étant adjacente au deuxième panneau de média filtrant ; optionnellement où les premier et deuxième panneaux de média filtrant sont des panneaux de média à plissement formés à partir d'une feuille de média filtrant présentant une pluralité de panneaux (187) formés par une alternance de plis (185), les plis s'étendant longitudinalement entre les troisième (120, 122) et quatrième (124, 126) côtés des panneaux de média filtrant (102, 104), le premier côté des panneaux de média filtrant étant adjacent au cadre de base (144) et le deuxième côté du panneau de média filtrant étant espacé du premier côté et du cadre de base, les troisième et quatrième côtés des panneaux de média filtrant s'étendant entre les premier et deuxième côtés ; optionnellement où une structure de support de deuxième côté est prévue de manière adjacente aux deuxièmes côtés des premier et deuxième panneaux de média et au cadre de support ; une portion de la feuille de média filtrant s'étendant entre le cadre de support et la structure de support de deuxième côté.

13. L'élément filtrant (100) de la revendication 1, où les premier et deuxième panneaux de media filtrant (102, 104) définissent des faces intérieures (128, 130), les faces intérieures des premier et deuxième panneaux de média filtrant étant globalement orientées l'une vers l'autre ; optionnellement où le cadre de support (142) et le cadre de base (144) maintiennent les faces intérieures des premier et deuxième panneaux de média filtrant dans une orientation non-parallèle, les premiers côtés (112, 114) des premier et deuxième panneaux étant espacés l'un de l'autre d'une distance supérieure à celle des deuxièmes côtés (116, 118) des premier et deuxième panneaux de telle sorte que la cavité (106) est globalement en forme de coin ; optionnellement où chacune des première (202) et deuxième (204) portions du cadre de base (144) définit des première et deuxième surfaces de positionnement en biseau (210, 214 ; 212, 216), le premier côté (112) du premier panneau de média filtrant (102) étant supporté sur les premières surfaces de positionnement en biseau (210, 214) et le premier côté (114) du deuxième panneau de média filtrant (104) étant supporté sur les deuxièmes surfaces de positionnement en biseau (212, 216).

14. L'élément filtrant (100) de la revendication 13, où : les premières surfaces de positionnement en biseau (210, 214) sont essentiellement parallèles au premier côté (112) du premier panneau de média filtrant (102) et les deuxièmes surfaces de positionnement en biseau (212, 216) sont essentiellement parallèles au premier côté (114) du deuxième panneau de média filtrant (104) ; ou bien les premières surfaces de positionnement en biseau sont essentiellement perpendiculaires à la face intérieure (128) du premier panneau de média filtrant et les deuxièmes surfaces de positionnement en biseau sont essentiellement perpendiculaires à la face intérieure (130) du deuxième panneau de média filtrant.
